(19) Europäisches Patentamt
European Patent Office
Office européen des brevets

(11) **EP 3 715 244 B1**

(12) **EUROPEAN PATENT SPECIFICATION**

(45) Date of publication and mention
of the grant of the patent:
**28.09.2022 Bulletin 2022/39**

(21) Application number: **19215274.2**

(22) Date of filing: **11.12.2019**

(51) International Patent Classification (IPC):
**B64C 25/36** *(2006.01)*    **B60B 3/08** *(2006.01)*
**B60B 25/00** *(2006.01)*    **F16B 37/00** *(2006.01)*
**F16D 55/24** *(2006.01)*    **F16D 65/02** *(2006.01)*
**F16D 65/12** *(2006.01)*

(52) Cooperative Patent Classification (CPC):
**B64C 25/36; B60B 3/08; B60B 25/002;
F16B 37/00; F16D 55/24; F16D 65/12;**
F16D 2065/1372; F16D 2065/1392

(54) **BOLTED JOINT FOR WHEEL ASSEMBLIES**

SCHRAUBVERBINDUNG FÜR RADANORDNUNGEN

RACCORD BOULONNÉ POUR ENSEMBLE ROUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2019 US 201916363522**

(43) Date of publication of application:
**30.09.2020 Bulletin 2020/40**

(73) Proprietor: **Goodrich Corporation
Charlotte, NC 28217-4578 (US)**

(72) Inventors:
• **WHITTLE, Scott**
**Springboro, OH 45066 (US)**
• **WAGNER, Nicholas P.**
**Troy, OH 45373 (US)**

(74) Representative: **Dehns**
**St. Bride's House
10 Salisbury Square
London EC4Y 8JD (GB)**

(56) References cited:
**EP-A2- 3 053 758    CA-A1- 2 251 254**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD

The present disclosure relates to a method of assembling a wheel assembly.

### BACKGROUND

Aircraft typically include landing gear for supporting the aircraft above a ground surface and for allowing the aircraft to move relative to the ground surface while remaining supported by the ground surface. The landing gear may include one or more wheel assemblies. The wheel assemblies may be split wheel assemblies, for example, and may have an inboard wheel portion and an outboard wheel portion. Such wheel portions of a split wheel are often held together using a plurality of tie bolts. Such tie bolt configurations may have a limited useful life in view of the repetitive and extreme operating conditions of aircraft wheel assemblies. For example, tie bolts of aircraft wheel assemblies may experience tensile and bending stresses in response to static internal loads (such as tie bolt preload and tire inflation pressure) and/or dynamic external radial and side loads during operation (e.g., wheel rolling, aircraft taxi maneuvers, etc.). While conventional solutions for mitigating tensile and bending stresses and improving fatigue life involve using more robust materials and/or using more material (e.g., bolt length, bolt diameter, wheel half dimension, etc.), such solutions generally involve increased costs and/or increased volume and weight, which adversely affects operating efficiencies. CA 2251 254 A1 discloses a method of assembly a wheel assembly according to the preamble of claim 1. EP 3053758 A2 discloses a wheel assembly having a tie bolt retention system.

### SUMMARY

According to a first aspect, there is disclosed is a method of assembling a wheel assembly according to claim 1.

The method includes, before inserting the threaded end of the bolt through the bore opening and into the bore of the nut, removing a first section of threads from the bore of the first portion of the nut, thereby leaving a second section of threads in the bore of the second portion of the nut. According to the disclosed method, torqueing (e.g., preloading) the bolt relative to the nut comprises engaging the threaded end of the bolt to the second section of threads. Removing the first section of threads from the bore of the first portion of the nut may include machining away the first section of threads.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates an aircraft having multiple landing gear,

FIG. 2 illustrates a wheel assembly,

FIG. 3 is a perspective cross-sectional side view of a wheel assembly,

FIG. 4 is a perspective cross-sectional view of a portion of the wheel assembly of FIG. 3,

FIG. 5 is a perspective view of a nut of a wheel assembly,

FIG. 6A is a schematic flow chart diagram of a method of assembling a wheel assembly,

FIG. 6B is a schematic flow chart diagram of a method of assembling a wheel assembly,

FIG. 7A is a plot showing a percent increase in fatigue life (vs a standard nut) as a function of joint opening angle, and

FIG. 7B is a plot showing a percent increase in fatigue life (vs a standard nut) as a function of joint opening angle.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures.

### DETAILED DESCRIPTION

The detailed description of examples herein makes reference to the accompanying drawings, which show examples by way of illustration. While these examples are described in sufficient detail to enable those skilled in the art to practice the disclosure, it should be understood that other examples may be realized and that logical changes and adaptations in design and construction may be made in accordance with this disclosure and the teachings herein without departing from the scope of the disclosure. Thus, the detailed description herein is presented for purposes of illustration only and not of limitation.

As used herein, a first component that is "radially outward" of a second component means that the first component is positioned at a greater distance away from a common axis than the second component. A first component that is "radially inward" of a second component means that the first component is positioned closer to the common axis than the second component. In the case of components that rotate circumferentially about a common axis, a first component that is radially inward of a second component rotates through a circumferentially shorter path than the second component. As used herein, "distal" refers to the direction outward, or generally, away from a reference component. As used herein, "proximal" and/or "proximate" refer to a direction inward, or generally, towards the reference component.

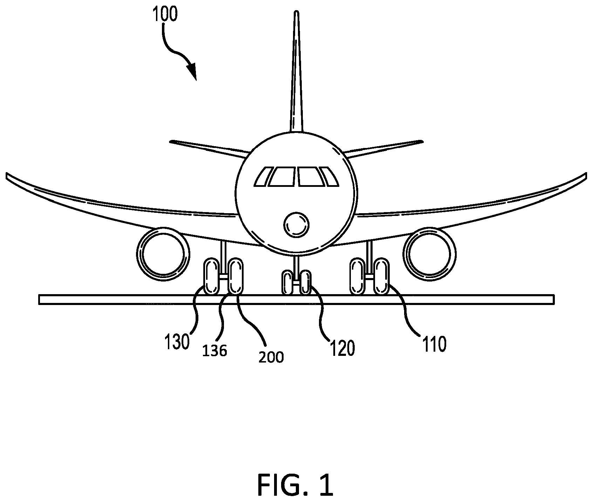

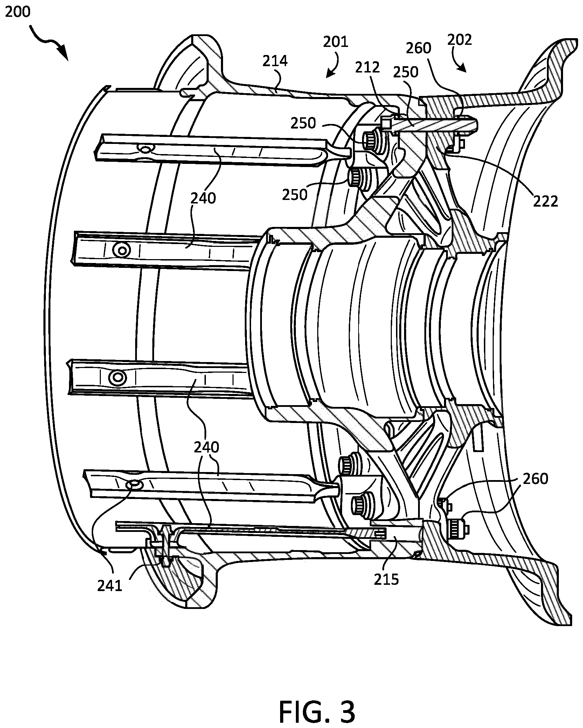

With reference to FIG. 1, an aircraft 100 in accordance with various examples can include multiple landing gear including a first landing gear 110, a second landing gear 120 and a third landing gear 130. Each landing gear may include one or more wheel assemblies 200 (FIG. 3). For example, the third landing gear 130 may include an inner/inboard wheel assembly and an outer/outboard wheel assembly. Each wheel assembly of the aircraft 100 may be designed to receive a tire. For example, a tire 136 may be placed about an outer circumference of wheel assembly 200 and inflated.

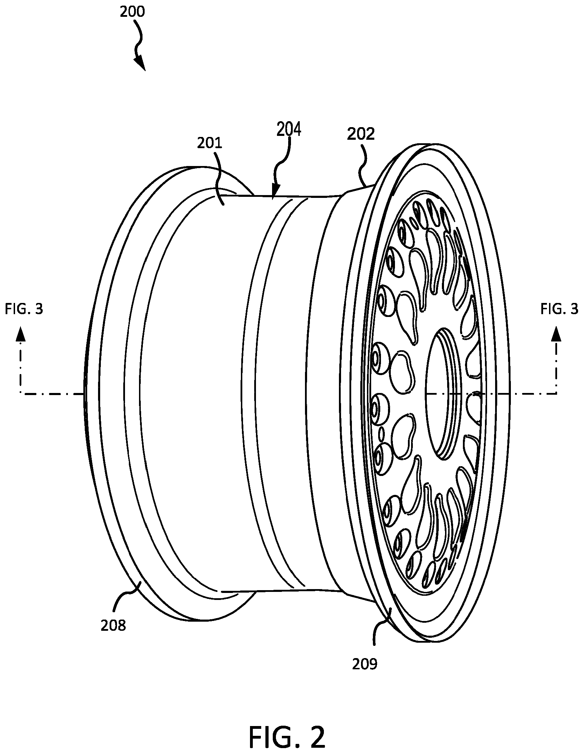

Turning to FIG. 2, wheel assembly 200 includes a split wheel comprised of a first wheel portion 201 and a second wheel portion 202, according to various examples. That is, wheel assembly 200 may include a split wheel having multiple wheel portions, such as an inboard wheel portion and an outboard wheel portion. Wheel portions 201, 202, for example, may be referred to as wheel halves (e.g., the first wheel portion 201 may be referred to as an inboard wheel half and the second wheel portion may be referred to as an outboard wheel half). The wheel assembly 200 may be implemented with any landing gear of the aircraft 100 (e.g., any of the three landing gears mentioned above), and the wheel assembly 200 may be an inner/inboard wheel assembly or an outer/outboard assembly. Although numerous details are included herein pertaining to the implementation of the wheel assembly 200 in an aircraft, one skilled in the art will realize that a similar wheel assembly may be used in other vehicles, such as cars or motorcycles, and thus the scope of the present disclosure is not necessarily limited to aircraft wheel assemblies.

In various examples, wheel assembly 200 also defines a tube-well 204. Tube-well 204 may be defined by respective flange sections of the first wheel portion 201 and the second wheel portion 202. Tube-well 204 may be configured to receive a tire and may form a seal with tire to allow pressurized air to inflate the tire. In various examples, the first wheel portion 201 also includes a radially outward extending lip or rim 208 located at an inboard end of the first wheel portion 201, and the second wheel portion 202 may also include a similar radially outward extending lip or rim 209 located at an outboard end of the second wheel portion 202.

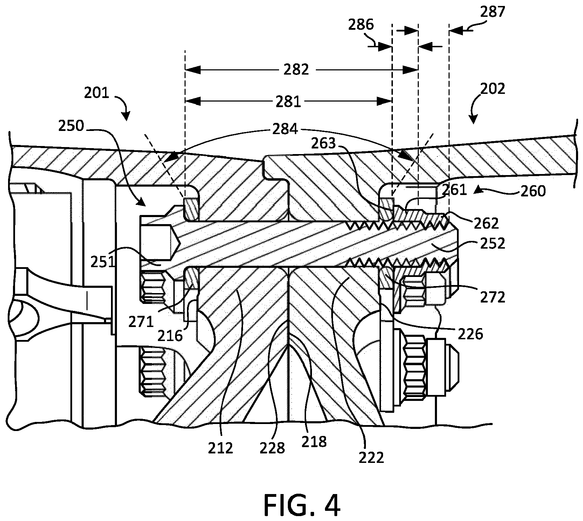

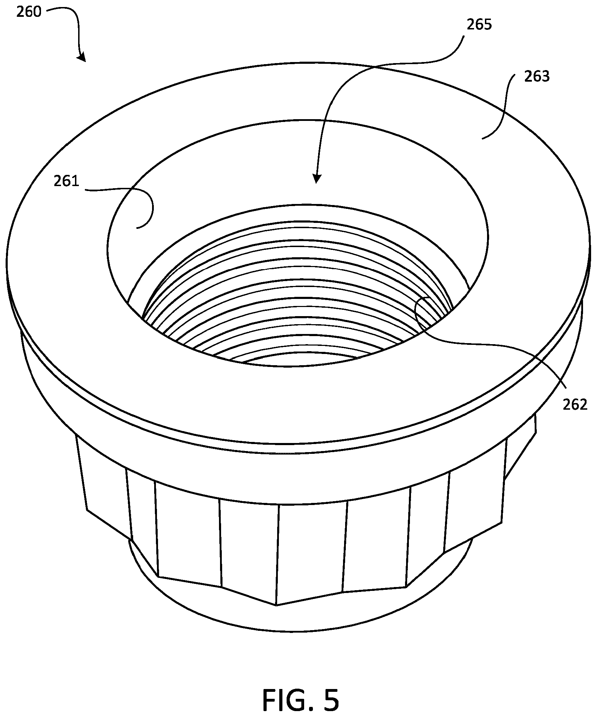

In various examples, and with reference to FIG. 3, the first wheel portion 201 has a first web 212 and the second wheel portion has a second web 222. The wheel assembly 200 further includes a plurality of bolts 250 and nuts 260 for retaining the two wheel portions 201, 202 together, according to various examples. Additional details pertaining to the bolt(s) 250 and nut(s) 260 are included below with reference to FIGS. 4 and 5. The wheel assembly 200 may also include one or more torque bars 240 that are coupled to the first wheel portion 201 (e.g., coupled to a flange section 214 of the first wheel portion 201), and an outboard end of each torque bar 240 may be disposed and at least partially retained within a respective torque bar retention slot 215 defined in the first web 212 of the inboard wheel portion 201. The torque bars 240 may be distributed circumferentially around a radially inward surface of inboard wheel portion 201. For example, one or more fasteners 241 may be utilized to anchor inboard portions of each torque bar 240 to flange section 214, while the torque bar retention slot 215 anchors and retains the torque bar 240 to the first web 212 of the first wheel portion 201. One or more rotor disks of a multi-disk brake stack may be coupled to the torque bar(s) 240, and compression of the rotor disks and the stator disks of the brake stack results in a braking force applied to the wheel.

In various examples, and with reference to FIG. 4, a magnified view of a bolt 250 extending through both the first wheel portion 201 and the second wheel portion 202 is provided. The first wheel portion 201 has a first web 212, and the first web 212 comprises a first mating surface 218 and a first outer surface 216 opposite the first mating surface 218, according to various examples. Correspondingly, the second wheel portion 202 also has a second web 222, and the second web 222 comprises a second mating surface 228 and a second outer surface 226 opposite the second mating surface 228. The bolt 250 and the nut 260 are generally configured to the compress the first and second wheel portions 201, 202 together such that the first and second mating surfaces 218, 228 directly engage each other. That is, the two wheel portions directly contact and abut each other along at least a portion the respective mating surfaces 218, 228. In various examples, the bolt 250 and nut 260 are preloaded such that the bolt 250 is in tension and the first and second wheel portions 201, 202 are compressed together.

In various examples, and with reference to FIGS. 4 and 5, the bolt 250 has a head 251 and a threaded end 252. The head 251 of the bolt 250 engages the first outer surface 216 of the first wheel portion 201, the threaded end 252 of the bolt extends into a bore 265 (FIG. 5) of the nut 260, the threaded end 252 is coupled to the nut 260, and a thrust face 263 of the nut 260 engages the second outer surface 226 of the second wheel portion 202. In various examples, the wheel assembly 200 further includes washers disposed between the head 251 of the bolt 250 and the thrust face 263 of the nut 260. That is, a first washer 271 may be disposed between the head 251 of the bolt 250 and the first outer surface 216 of the first wheel portion such that the head of the bolt 250 engages the first outer surface 216 via the first washer 270, and a second washer 272 may be disposed between the thrust face 263 of the nut and the second outer surface 226 of the second wheel portion 202 via the second washer 272.

The nut 260, however, is not a conventional nut that has threads disposed along an entire length of the inner cylindrical wall that defines the bore 265. Instead, the nut 260 has a first portion 261 and a second portion 262, with the bore 265 in the first portion 261 of the nut 260 being nonthreaded and the bore in the second portion 262 of the nut 260 being threaded. As used herein, the term nonthreaded refers to a section of the bore 265 of the nut 260 that does not have mechanical threads. For example, the section of the bore 265 disposed in the first portion 261 of the nut 260 may be defined by a smooth cylindrical inner wall. Said differently, although the bore 265 extends through both the first portion 261 and the second portion 262 of the nut 260, only a section of the nut 260 (e.g., the second portion 262) has internal threads.

In various examples, and with continued reference to FIGS. 4 and 5, the first portion 261 of the nut 260 comprises a thrust face 263. The thrust face 263 of the nut engages the second outer surface 226 of the second wheel portion 202. Thus, the first portion 261 of the nut 260 is closest to the second wheel portion 202, and thus the first portion 261 of the nut 260 is disposed axially between the second outer surface 226 of the second wheel portion 202 and the second portion 262 of the nut 260. As used herein, the terms "axial" and "axially" refer to a direction that is generally parallel to the longitudinal axis of the bolt and/or generally parallel to the overall axis of rotation of the wheel assembly.

With the nut 260 being configured in this manner, the bolt 250 has a clamped length 281 and an effective bending length 282. The clamped length 281 is generally defined herein as the distance between the head 251 of the bolt 250 and the thrust face 263 of the nut 260, and thus refers to the region clamped/compressed by the bolt/nut system. The effective bending length 282 is generally defined herein as the distance between the head 251 of the bolt 250 and the second portion 262 of the nut 260, and thus refers to the length of the bolt 250 deflected by the bending moment. That is, because the threaded end 252 of the bolt 250 is not directly nor threadably engaged to the first portion 261 of the nut 260, the effective bending length 282 of the bolt 250, at least for purposes of calculating bending stress (as described in more detail below), is greater than it would otherwise be if the nut had threads on the first portion. Accordingly, by using a nut 260 having this configuration (first portion 261 nonthreaded, second portion 262 threaded), the effective bending length of the bolt 250 is increased (i.e., the effective bending length 282 is greater than the clamped length 281) without having to actually increase the length of the bolt 250. Therefore, as further articulated below, the bending stress is decreased and the fatigue/useful life is increased without adding extra material (i.e., weight) to the assembly.

In various examples, and as shown in the following equations, bending stress of a bolt is dependent on the effective bending length 282 of the bolt 250.

$$\text{Equation 1} \qquad \sigma = M * c / I$$

$$\text{Equation 2} \qquad dx/dy = M * L / E * I$$

$$\text{Equation 3} \qquad M = dx/dy * E * I / L$$

$$\text{Equation 4} \qquad \sigma = dx/dy * E * c / L$$

$dx/dy$ = slope
$M$ = bending moment
$L$ = effective bending length of bolt
$E$ = elastic modulus
$C$ = radius of bolt
$I$ = Moment of Inertia
$\sigma$ = stress

Equation 1 shows bolt bending stress as a function of various parameters (defined above). Equation 2 shows how the slope (e.g., joint opening angle) of the bolt is dependent on the bending moment, and Equation 3 is merely Equation 2 after solving for the bending moment. Combining Equations 1 and 3 produces Equation 4 (more specifically, the bending moment variable ("M") in Equation 1 is replaced with Equation 3, thereby resulting in Equation 4. As is apparent from Equation 4, increase the effective bending length ("L") of the bolt means an increase in the denominator, which decreases the calculated stress.

In various examples, the second portion 262 of the nut 260 has a thread count sufficient to maintain strength/integrity of the bolted joint. As used herein, the term "thread count" refers to the number of complete thread/raceway rotations around the inner surface of the nut 260. For example, the second portion 262 of the nut 260 comprises a thread count of between 3 and 10 threads. In various examples, the thread count of the second portion 262 of the nut 260 is between 3 and 7 threads. In various examples, the first portion 261 of the nut 260 has a first axial length 286 and the second portion 262 of the nut 260 has a second axial length 287. The sum of the first axial length 286 and the second axial length 287 is referred to herein as the third axial length, which may be the total/overall axial length of the nut 260. In various examples, the first axial length 286 is between 10% and 75% of the third axial length. In various examples, the first axial length 286 is between 15% and 50% of the third axial length. In various examples, the first axial length 286 is between 15% and 30% of the third axial length. In various examples, bore 265 in the first portion 261 of the nut 260 has a first diameter, the bore 265 in the second portion 262 of the nut 260 has a maximum second diameter, and the first diameter is equal to or greater than the maximum second diameter. In various examples, the first diameter is substantially equal to the maximum second diameter. As used in this context only, the term "substantially equal" means the first diameter is equal to or up to 10% greater than the maximum second diameter. Thus, the threaded end 252 of the bolt 250 may be directly adjacent to the cylindrical wall defining the bore 265 in the first portion 261 of the nut 260 such that no intervening elements are disposed between the threaded end 252 of the bolt 250 and the first portion 261 of the nut 260 within the bore 265.

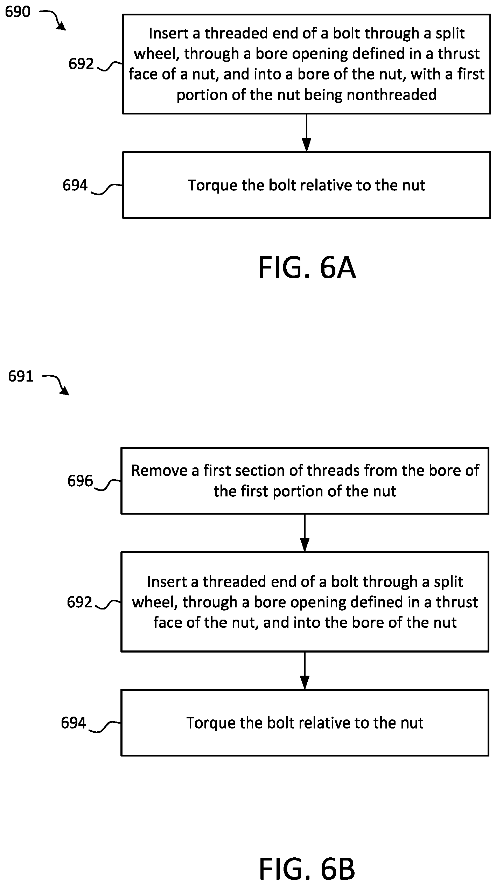

With reference to FIG. 6A, a method 690 of assembling a wheel assembly of an aircraft is provided. The method 690 includes inserting a threaded end of a bolt through a split wheel, through a bore opening defined in a thrust face of a nut, and into a bore of the nut, with a first portion of the nut being nonthreaded (step 692). The method 690 further includes torqueing or preloading (e.g., applying rotational force to) the bolt relative to the nut at step 694. Step 692 includes inserting the threaded end of the bolt through a first wheel portion and a second wheel portion of the split wheel. The has a first portion and a second portion, with the thrust face being disposed on the first portion, and the bore extending through both the first portion and the second portion. The first portion, as mentioned above, is nonthreaded, but the second portion is threaded to enable coupling of the threaded end of the bolt to the nut. In examples not forming part of the claimed invention, the nut may be originally designed/manufactured to not have any threads in the first portion.

With reference to FIG. 6B, the method 691 according to the invention further includes, before steps 692 and 694, removing a first section of threads from the bore of the first portion of the nut at step 696, thereby leaving a second section of threads in the bore of the second portion of the nut. That is, the method 691 may include machining away or otherwise modifying an existing nut to remove threads in the bore in the first portion of the nut.

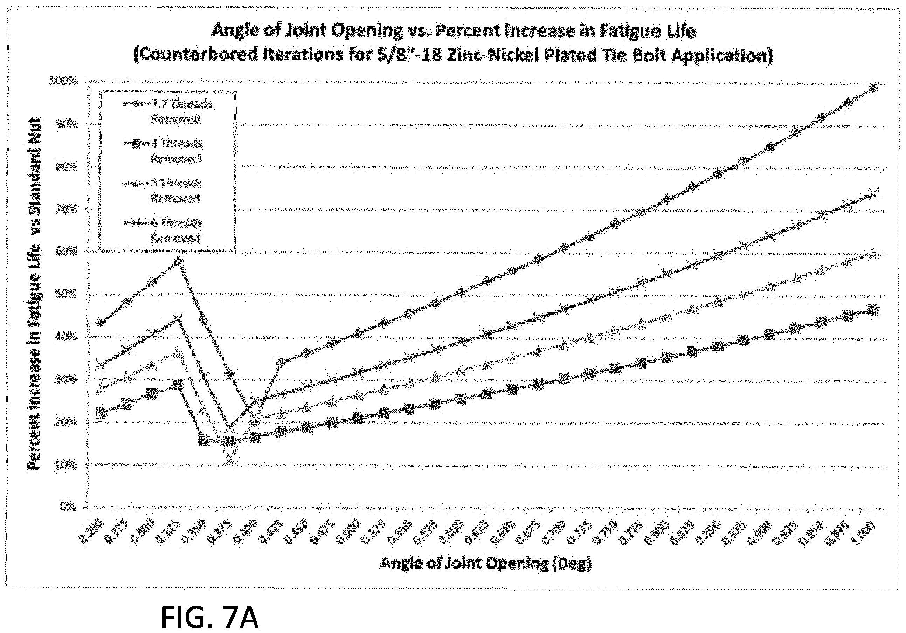

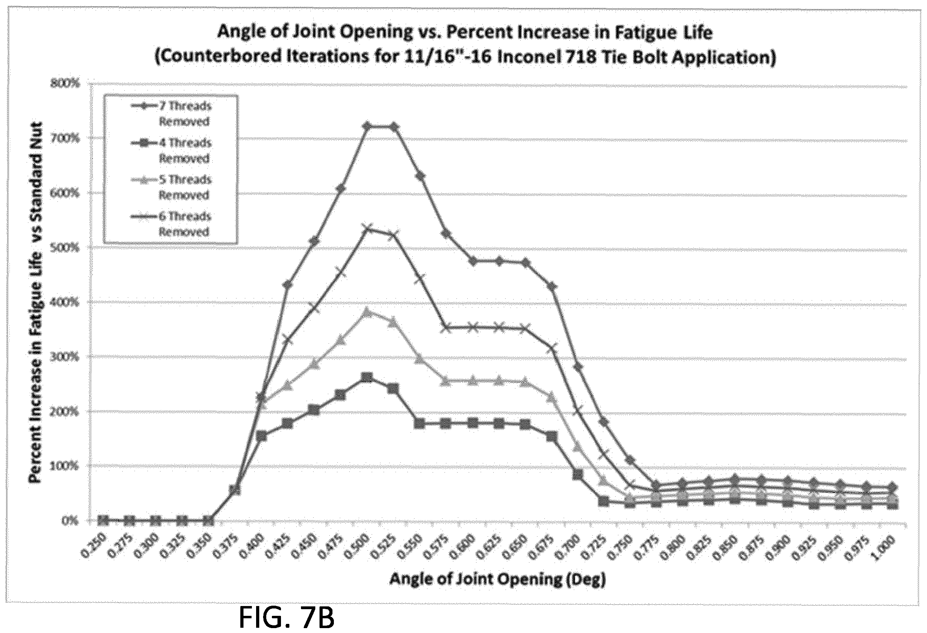

In various examples, and with reference to FIGS. 7A and 7B, increased fatigue life across various bolt sizes, for both steel (FIG. 7A) and nickel alloy bolts, such as Inconel® (FIG. 7B). More specifically, FIGS. 7A and 7B show the percent increase in predicted fatigue life relative to a standard mating nut at a specific preload equal to a percentage of the bolt strength over a range of opening angles 284 (FIG. 4). As used herein, the terms "joint opening angle" or simply "opening angle" 284 refer to degree of bending experienced by a bolt in response to the various loads placed on the bolt and wheel assembly (e.g., static internal loads, such as tie bolt preload and tire inflation pressure, and/or dynamic external radial or side loads). As is generally apparent from the plots in FIGS. 7A and 7B, the more threads removed from a standard nut (e.g., a nut that is originally threaded from end to end but is converted to nut 260), the greater the percent of increase in fatigue life due to the decreased bending stress experienced by the bolt as a result of the increased effective bending length of the bolt.

Benefits, other advantages, and solutions to problems have been described herein with regard to specific examples. . Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Also, any reference to attached, fixed, connected, coupled or the like may include permanent (e.g., integral), removable, temporary, partial, full, and/or any other possible attachment option. Different cross-hatching is used throughout the figures to denote different parts but not necessarily to denote the same or different materials.

The steps recited in any of the method or process descriptions may be executed in any order and are not necessarily limited to the order presented, unless so defined by the claims.

Furthermore, any reference to singular includes plural examples, and any reference to more than one component or step may include a singular example or step. Elements and steps in the figures are illustrated for simplicity and clarity and have not necessarily been rendered according to any particular sequence. For example, steps that may be performed concurrently or in different order are illustrated in the figures to help to improve understanding of examples of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one example", "an example", "various examples"; etc., indicate that the example described may include a particular feature, structure, or characteristic, but every example may not necessarily include the particular feature, structure, or characteristic. Moreover, such phrases are not necessarily referring to the same example.

Further, when a particular feature, structure, or characteristic is described in connection with an example, it is submitted that it is within the knowledge of one skilled in the art to affect such feature, structure, or characteristic in connection with other examples whether or not explicitly described. After reading the description, it will be apparent to one skilled in the relevant art(s) how to implement the disclosure in alternative examples.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method (690) of assembling a wheel assembly (200), the method comprising:

   inserting (692) a threaded end (252) of a bolt (250) through a first wheel portion (201) and a second wheel portion (202) of a split wheel, through a bore opening defined in a thrust face of a nut (260), and into a bore (265) of the nut, wherein:

   a first portion (261) of the nut comprises the thrust face;
   the first portion of the bore is nonthreaded; and
   a second portion (262) of the bore is threaded; and

torqueing (694) the bolt relative to the nut such that the threaded end of the bolt is coupled to the second portion of the nut, wherein torqueing the bolt relative to the nut compresses the first wheel portion and the second wheel portion together; the method **characterized by** further comprising, before inserting the threaded end of the bolt through the bore opening and into the bore of the nut, removing (696) a first section of threads from the bore of the first portion of the nut, thereby leaving a second section of threads in the bore of the second portion of the nut, wherein torqueing the bolt relative to the nut comprises engaging the threaded end of the bolt to the second section of threads.

2. The method of claim 1, wherein removing the first section of threads from the bore of the first portion of the nut comprises machining away the first section of threads.

3. The method of claim 2, wherein machining away the first section of threads comprises forming the bore in the first portion of the nut to have a first diameter, wherein the bore in the second portion of the nut has a maximum second diameter and the first diameter is substantially equal to the maximum second diameter.

## Patentansprüche

1. Verfahren (690) zum Montieren einer Radanordnung (200), wobei das Verfahren Folgendes umfasst:

   Einführen (692) eines Gewindeendes (252) einer Schraube (250) durch einen ersten Radabschnitt (201) und einen zweiten Radabschnitt (202) eines geteilten Rads, durch eine Bohrungsöffnung, die in einer Druckfläche einer Mutter (260) definiert ist, und in eine Bohrung (265) der Mutter, wobei:

   ein erster Abschnitt (261) der Mutter die Druckfläche umfasst;
   der erste Abschnitt der Bohrung kein Gewinde aufweist; und
   ein zweiter Abschnitt (262) der Bohrung ein Gewinde aufweist; und

   Anziehen (694) der Schraube relativ zu der Mutter, sodass das Gewindeende der Schraube an den zweiten Abschnitt der Mutter gekoppelt ist, wobei das Anziehen der Schraube relativ zu der Mutter den ersten Radabschnitt und den zweiten Radabschnitt zusammendrückt; wobei das Verfahren **dadurch gekennzeichnet ist, dass** es vor dem Einführen des Gewindeendes der Schraube durch die Bohrungsöffnung und in die Bohrung der Mutter ferner Entfernen (696) eines ersten Gewindebereiches aus der Bohrung des ersten Abschnitts der Mutter umfasst, wodurch ein zweiter Gewindebereich in der Bohrung des zweiten Abschnitts der Mutter verbleibt, wobei das Anziehen der Schraube relativ zu der Mutter Eingreifen des Gewindeendes der Schraube in den zweiten Gewindebereich umfasst.

2. Verfahren nach Anspruch 1, wobei das Entfernen des ersten Gewindebereiches aus der Bohrung des ersten Abschnitts der Mutter maschinelles Abtragen des ersten Gewindebereiches umfasst.

3. Verfahren nach Anspruch 2, wobei das maschinelle Abtragen des ersten Gewindebereiches Ausbilden der Bohrung in dem ersten Abschnitt der Mutter derart, dass diese einen ersten Durchmesser aufweist, umfasst, wobei die Bohrung in dem zweiten Abschnitt der Mutter einen maximalen zweiten Durchmesser aufweist und der erste Durchmesser im Wesentlichen gleich dem maximalen zweiten Durchmesser ist.


**Revendications**

1. Procédé (690) d'assemblage d'un ensemble roue (200), le procédé comprenant :

l'insertion (692) d'une extrémité filetée (252) d'un boulon (250) à travers une première partie de roue (201) et une seconde partie de roue (202) d'une roue divisée, à travers une ouverture d'alésage définie dans une surface d'appui d'un écrou (260), et
dans un alésage (265) de l'écrou, dans lequel :

une première partie (261) de l'écrou comprend la surface d'appui ;
la première partie de l'alésage est non filetée ; et
une seconde partie (262) de l'alésage est filetée ; et
le serrage (694) du boulon par rapport à l'écrou de sorte que l'extrémité filetée du boulon soit couplée à la seconde partie de l'écrou, dans lequel le serrage du boulon par rapport à l'écrou comprime la première partie de roue et la seconde partie de roue ensemble ; le procédé étant **caractérisé en ce qu'**il comprend en outre, avant l'insertion de l'extrémité filetée du boulon à travers l'ouverture d'alésage et dans l'alésage de l'écrou, le retrait (696) d'une première section de filets de l'alésage de la première partie de l'écrou, laissant ainsi une seconde section de filets dans l'alésage de la seconde partie de l'écrou, dans lequel le serrage du boulon par rapport à l'écrou comprend la mise en prise de l'extrémité filetée du boulon avec la seconde section de filets.

2. Procédé selon la revendication 1, dans lequel le retrait de la première section de filets de l'alésage de la première partie de l'écrou comprend le retrait par usinage de la première section de filets.

3. Procédé selon la revendication 2, dans lequel le retrait par usinage de la première section de filets comprend la formation de l'alésage dans la première partie de l'écrou pour avoir un premier diamètre, dans lequel l'alésage dans la seconde partie de l'écrou a un second diamètre maximal et le premier diamètre est sensiblement égal au second diamètre maximal.

FIG. 1

FIG. 2

FIG. 3

FIG. 4

FIG. 5

690

692

Insert a threaded end of a bolt through a split wheel, through a bore opening defined in a thrust face of a nut, and into a bore of the nut, with a first portion of the nut being nonthreaded

694

Torque the bolt relative to the nut

FIG. 6A

691

696

Remove a first section of threads from the bore of the first portion of the nut

692

Insert a threaded end of a bolt through a split wheel, through a bore opening defined in a thrust face of the nut, and into the bore of the nut

694

Torque the bolt relative to the nut

FIG. 6B

FIG. 7A

Angle of Joint Opening vs. Percent Increase in Fatigue Life
(Counterbored Iterations for 11/16"-16 Inconel 718 Tie Bolt Application)

Percent Increase in Fatigue Life vs Standard Nut

Angle of Joint Opening (Deg)

7 Threads Removed
4 Threads Removed
5 Threads Removed
6 Threads Removed

FIG. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2251254 A1

- EP 3053758 A2